Europäisches Patentamt

(19) European Patent Office

Office européen des brevets

(11) Numéro de publication: **0 290 701**
**B1**

(12) **FASCICULE DE BREVET EUROPEEN**

(45) Date de publication du fascicule du brevet:
**08.08.90**

(21) Numéro de dépôt: **87401082.0**

(22) Date de dépôt: **14.05.87**

(51) Int. Cl.⁵: **B62D 5/083**

(54) Distributeur hydraulique, notamment pour servo-direction de véhicule.

(43) Date de publication de la demande:
**17.11.88 Bulletin 88/46**

(45) Mention de la délivrance du brevet:
**08.08.90 Bulletin 90/32**

(84) Etats contractants désignés:
**DE FR GB IT**

(56) Documents cités:
**EP-A- 0 095 415**
**GB-A- 2 028 240**
**GB-A- 2 102 361**

**PATENT ABSTRACTS OF JAPAN,**
**vol. 10, no. 167 (M-488)[2223], 13 juin 1986; &**
**JP-A-61 18 564 (ATSUGI JIDOUSHIYA BUHIN**
**K.K.) 27-01-1986**
**PATENT ABSTRACTS OF JAPAN,**
**vol. 9, no. 107 (M-378)[1830], 11 mai 1985; &**
**JP-A-59 230 864 (TOYODA KOKI K.K.) 25-12-1984**

(73) Titulaire: **BENDIX ESPANA S.A., Balmes 243,**
**Barcelona 6(ES)**

(72) Inventeur: **Bacardit, Juan Simon, Calle**
**Mallorca 451 6 4aA, Barcelona 13(ES)**

(74) Mandataire: **Timoney, Ian Charles Craig et al, BENDIX**
**FRANCE Division Technique Service Brevets Bendix**
**Europe 126, rue de Stalingrad, F-93700 Drancy(FR)**

## Description

La présente invention concerne les distributeurs hydrauliques, notamment pour servo-direction de véhicule, du type comprenant une paire de circuits parallèles entre une source de fluide sous pression et une bâche, chaque circuit parallèle comportant, en série, au moins une première et une seconde restrictions modulables de distribution, les restrictions modulables des deux circuits étant actionnables en synchronisme par un organe d'entrée du distributeur pour commander un moteur hydraulique ayant des chambres opposées reliées chacune à un circuit parallèle respectif en un point de celui-ci situé entre les première et seconde restrictions modulables de la paire associée, et comportant un moyen de restriction fixe mis en œuvre par l'organe d'entrée dans chaque circuit parallèle, en synchronisme avec les restrictions modulables de distribution.

Un distributeur hydraulique de ce type est décrit dans le document GB-A 2 028 240. Dans ce document, qui décrit un distributeur hydraulique du type à douille et à rotor cylindriques, la restriction fixe, constituée d'un passage traversant de section réduite ménagé dans le rotor, est mise en œuvre, lors de l'actionnement du rotor, en aval de la seconde restriction modulable de distribution actionnée dans le sens de son ouverture pour permettre le délestage de la chambre non pilotée du moteur hydraulique en fermant le passage direct entre cette seconde restriction modulable de distribution et le retour vers la bâche pour contraindre le flux de fluide hydraulique retournant vers la bâche d'adopter un chemin dérivé passant par cette restriction fixe. Si un tel agencement permet, de façon en soi connue, de limiter les bruits d'origine hydraulique lors de la mise en œuvre du distributeur en introduisant une perte de charge dans le circuit de retour vers la bâche, la mise en œuvre, c'est à dire l'insertion de la restriction fixe s'effectue de façon non contrôlée pouvant introduire des risques de cavitation, voire de battements dans le distributeur.

La présente invention a pour objet de proposer un distributeur hydraulique perfectionné de ce type, permettant de réduire de façon signicative les bruits d'origine hydraulique lors de sa mise en œuvre avec un agencement de conception simple, fiable et robuste, n'affectant pas la précision et l'équilibre du distributeur, de faibles coûts de fabrication et autorisant de nombreuses adaptations selon le type de distributeur considéré.

Pour ce faire, selon l'invention, le moyen de restriction fixe est constitué par des première et seconde restrictions fixes disposées en série avec les restrictions modulables de distribution et situées en aval de la première restriction modulable de distribution, les première et seconde restrictions fixes étant susceptibles d'être mises en œuvre alternativement en fonction du sens d'actionnement des restrictions modulables de distribution par l'organe d'entrée.

Avec un tel agencement, une restriction fixe normalement non opérante est mise en œuvre ou introduite, dès que le distributeur est actionné, dans chaque circuit parallèle en aval de la restriction modulable de chaque circuit actionnée dans le sens de la fermeture, en créant ainsi, immédiatement en aval de la restriction criant de distribution qui se ferme, une contre-pression avec perte de charge permettant à l'écoulement de fluide fortement perturbé et devenu turbulent du fait de la fermeture de la restriction modulable de distribution, de recouvrer un régime à prédominance laminaire, et en réduisant ainsi considérablement les bruits d'origine hydraulique du distributeur.

D'autres caractéristiques et avantages de la présente invention ressortiront de la description suivante de modes de réalisation, donnés à titre illustratif mais nullement limitatif, faite en relation avec les dessins annexés, sur lesquels :

- la figure 1 est un schéma synoptique développé d'un premier mode de réalisation d'un distributeur hydraulique selon l'invention ;
- la figure 2 est une vue schématique en coupe transversale d'un distributeur hydraulique du type à rotor en étoile agencé conformément au schéma de la figure 1 ;
- la figure 3 est une demi-coupe longitudinale schématique du distributeur de la figure 2 ;
- la figure 4 est un schéma synoptique analogue à celui de la figure 1 montrant un second mode de réalisation de l'invention.
- la figure 5 est une vue partielle schématique en coupe transversale d'un distributeur hydraulique du type à rotor en étoile agencé conformément au schéma de la figure 4 ;
- les figures $6_A$ et $6_B$ sont des schémas synoptiques, pris selon les lignes de coupe $6_A$ et $6_B$ de la figure 7, analogues aux schémas des Figures 1 et 4 et montrant un autre mode de réalisation de l'invention ;
- la figure 7 est une vue analogue à la figure 2 d'un distributeur hydraulique à rotor en étoile agencé conformément au schéma des figure $6_A$ et $6_B$ ; et
- la figure 8 est un diagramme schématique illustrant l'implantation d'un distributeur hydraulique selon l'invention dans un circuit de commande de moteur hydraulique.

Dans la description qui va suivre et sur les dessins, les éléments identiques ou analogues portent les mêmes références, éventuellement indicées.

Dans la description et dans les revendications, par "restriction fixe" on entend un étranglement présentant une section de passage réduite constante sur une majeure partie de la course d'actionnement du distributeur. Par "mise en oeuvre" de la restriction fixe, on entend l'introduction, à partir d'un moment donné, de cette restriction fixe dans un trajet d'écoulement de fluide préalablement non sujet à s'écouler au travers de cette restriction fixe.

On se référera tout d'abord à la figure 8 qui illustre une implantation classique d'un distributeur hydraulique pour la commande d'un moteur hydraulique V comportant une paire de chambres d'actionnement antagonistes $V_1$ et $V_2$. Le distributeur hydraulique définit, entre une source de pression S et une bâche ou réservoir basse pression R, deux circuits de fluide parallèles $\alpha$, $\alpha'$ comportant chacun une

première et une seconde restrictions modulables A, B, et A', B', respectivement actionnables en synchronisme par un organe d'entrée 1 du distributeur, couplé par exemple à un volant de direction pour une servo-direction de véhicule automobile, le moteur hydraulique V étant alors couplé au mécanisme de direction des roues orientables du véhicule. Avec un tel agencement de distributeur, de façon classique, lorsque l'organe d'entrée 1 est actionné dans un sens, la première restriction A s'ouvre en même temps que la seconde restriction B se ferme, la première restriction A' de l'autre circuit parallèle se fermant alors en même temps que la seconde restriction B' de cet autre circuit s'ouvre, de façon à créer dans la chambre $V_1$ du moteur hydraulique V une augmentation de pression, le fluide précédemment contenu dans l'autre chambre $V_2$ du moteur hydraulique étant expulsé vers la bâche au travers de la seconde restriction B' ouverte. L'actionnement du distributeur dans l'autre sens est en tout point symétrique.

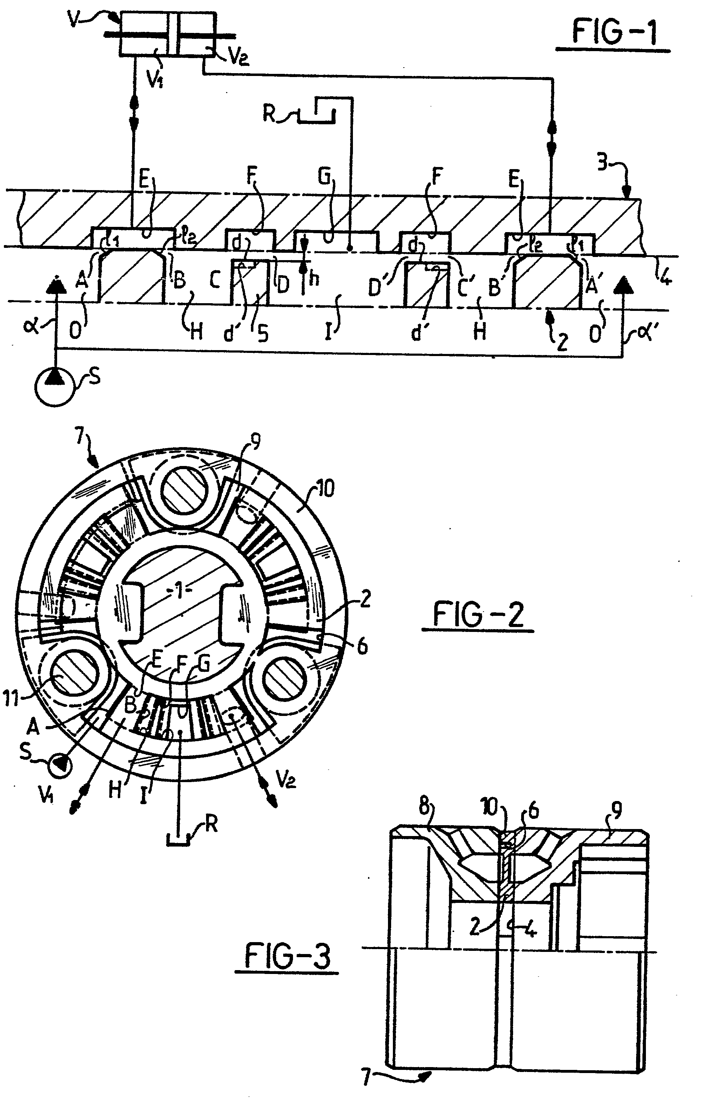

On a représenté sur les figures 1 à 3, un premier mode de réalisation d'un distributeur hydraulique selon l'invention. On reconnaît sur la figure 1 les restrictions modulables A, B et A', B' formées par des bords coopérants de lumières ou d'ouvertures formées respectivement dans un premier élément de distributeur 2 et dans un second élément de distributeur 3 comportant des faces adjacentes coopérantes représentées par le plan 4 de l'interface de contact entre ces faces coopérantes des éléments de distributeur 2 et 3. De façon classique, les restrictions modulables sont mises en oeuvres sous l'effet d'un déplacement relatif, parallèle au plan 4, des éléments de distributeur 2 et 3 l'un par rapport à l'autre de part et d'autre d'une position centrée de repos qui est celle représentée sur la figure 1. De façon plus spécifique , la première restriction modulable A est formée entre les bords coopérants d'une lumière d'admission O du premier élément de distributeur 2, reliée à la source de pression S, et d'une lumière de distribution E formée dans le second élément de distributeur 3 et reliée à la chambre $V_1$ du moteur hydraulique V. La seconde restriction modulable B est formée entre les bords coopérants de la lumière de distribution E et d'une lumière intermédiaire H formée dans le premier élément de distributeur 2 et isolée de la lumière d'admission O. De façon classique, les bords du premier élément de distributeur 2 formant les première et seconde restrictions modulables A et B comportent des chanfreins $l_1$ et $l_2$.

Conformément à l'invention, entre une lumière de décharge G, formée dans le second élément de distributeur 3 et reliée à la bâche R, et la lumière de distribution E est formée une lumière intermédiaire F. Dans le premier élément de distributeur 2 est formée une lumière centrale I s'étendant, parallèlement au plan 4, de part et d'autre de la lumière de décharge G pour communiquer avec la lumière intermédiaire F adjacente, cette lumière centrale I étant séparée de la lumière intermédiaire H par une portion de voile pleine 5 du premier élément de distributeur 2 ayant une extension, parallèlement au plan 4, inférieure à celle de la lumière intermédiaire F et dont la face $\underline{d}$ faisant face au second élément de distributeur 3 est légèrement décalée d'une distance $\underline{h}$ du plan de l'interface 4 (contrairement aux portions du premier élément de distributeur 2 entre les chanfreins $l_1$ et $l_2$ dont la face dirigée vers le second élément de distributeur 3 coincide avec le plan d'interface 4 de façon à permettre de fermer totalement l'une ou l'autre des restrictions modulables A et B ou A' et B'). On notera ainsi que, lors d'un déplacement relatif entre les éléments de distributeur 2 et 3, la portion 5 du premier élément de distributeur 2 créera, avec l'un ou l'autre des bords de la lumière intermédiaire F, une restriction fixe C ou D entre la chambre intermédiaire F et la chambre intermédiaire H ou la chambre centrale I, la section de la restriction fixe étant déterminée par l'espacement $\underline{h}$ susmentionné. La disposition de distributeur qui vient d'être décrite est en tout point symétrique pour l'autre circuit parallèle $\alpha'$.

On comprendra ainsi que, en déplaçant par exemple le premier élément de distributeur 2 vers la gauche (sur la figure 1) par rapport au second élément de distributeur 3, les restrictions modulables A et B' se ferment tandis que s'ouvrent les restrictions modulables A' et B. Lors de ce déplacement relatif des éléments de distributeur, les restrictions fixes C et D' sont alors introduites dans le circuit parallèle respectif, respectivement chacune en aval d'une restriction modulable se fermant du circuit associé. Ainsi, non seulement le fluide retournant à la bâche R en provenance de la lumière de distribution E de la chambre $V_1$, mais également le flux résiduel de fluide sous pression s'échappant de la lumière de distribution E de la chambre $V_2$ vers la bâche, lors de la fermeture de la seconde restriction modulable B', traversent les restrictions fixes mises en oeuvre associées C et D', lesquelles promeuvent ainsi, dans les lumières I et G, un écoulement laminaire permettant une réduction des bruits d'origine hydraulique pouvant atteindre 30 dB. La différentielle de pression de fluide hydraulique étant moins marquée entre la lumière de distribution correspondant à la chambre en décharge du moteur V (soit $V_1$ dans l'exemple ci-dessus ) et les lumières de retour I et G qu'entre ces dernières et l'autre lumière de distribution I et G lors de la mise en oeuvre du distributeur, les restrictions C et C' peuvent être moins prononcées que les restrictions D et D', auquel cas la face $\underline{d}$ de la partie de voile pleine 5 du premier élément de distributeur 2 peut présenter un décrochement supplémentaire entre les lumières H et F, comme figuré en $\underline{d}'$ sur la figure 1.

On a représenté sur les figures 2 et 3 un mode de réalisation pratique du distributeur représenté schématiquement sur la figure 1. Un tel distributeur à rotor en étoile est décrit notamment dans le document EP-A-0 095 415 au nom de la demanderesse, dont le contenu est supposé intégré ici pour référence. Le premier élément de distributeur 2 est constitué sous la forme d'un rotor plat en étoile comportant des bras radiaux reçus dans une chambre discoïde 6 d'un stator constitué par l'assemblage de deux éléments annulaires d'extrémité 8 et 9 et d'un élément d'entretoise annulaire 10 délimitant périphériquement la chambre 6, les différents éléments du stator 7 étant assemblés par des boulons 11 s'étendant axialement entre des bras adjacents du rotor 2. Le rotor 2 est couplé centralement à un arbre d'entrée 1. Comme on le voit, les lumières E, F, G sont formées dans au moins une des faces axiales planes de la cavité discoïde 6 coopérant avec les faces axiales planes des bras du rotor, les lumières H et I étant formées dans les bras du rotor 2, les lumières d'admission O étant formées entre les bras adjacents de ce rotor 2.

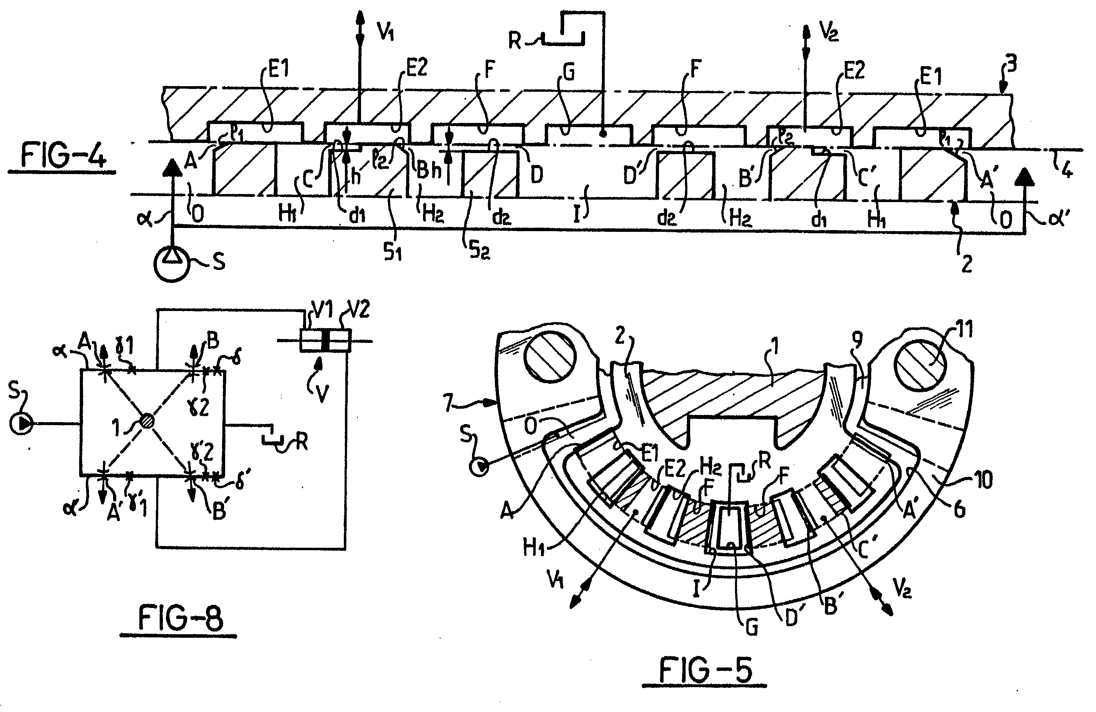

On a représenté sur les Figures 4 et 5 un autre mode de réalisation de distributeur selon l'invention. Dans ce mode de réalisation, le premier élément de distributeur 2 comprend, entre la lumière d'admission O et la lumière centrale I, deux chambres intermédiaires $H_1$ et $H_2$ délimitées par deux portions de voile séparées $5_1$ et $5_2$ du premier élément distributeur 2, le second élément de distributeur 3 comprenant ici une première lumière de distribution intermédiaire $E_1$ et une seconde lumière de distribution $E_2$ reliée, elle, à la chambre correspondante ($V_1$ ou $V_2$) du moteur hydraulique. Comme on le voit bien sur la figure 4, la première restriction modulable A est formée par les bords adjacents entre la lumière d'admission O et la première lumière de distribution $E_1$ tandis que la seconde restriction modulable B est formée entre la lumière intermédiaire $H_2$ du premier élément de distributeur 2 et le bord adjacent de la seconde lumière de distribution $2_2$ du second élément de distributeur 3. La première restriction fixe C est formée par un décrochement $d_1$ de la face de la portion $5_1$, en vis à vis de la seconde lumière de distribution $E_2$, opposé à la seconde restriction variable B, tandis que la seconde restriction D est formée, comme dans le mode de réalisation précédent, entre la lumière centrale I et la lumière intermédiaire F par un décrochement $d_2$ de la totalité de la face de la seconde portion $5_2$ du premier élément de distributeur 2.

Le fonctionnement de ce mode de réalisation est le suivant. En supposant que le premier élément de distributeur 2 est déplacé vers la gauche (sur la figure 4) par rapport au second élément de distributeur 3, les restrictions modulables A et B' se ferment tandis que s'ouvrent les restrictions modulables A' et B. Simultanément, la restriction fixe C est introduite dans le trajet de fluide entre les chambres $E_2$ et $E_1$, et donc directement en aval de la restriction modulable A qui se ferme. Dans l'autre circuit, la restriction fixe D' est quant à elle mise en oeuvre entre les chambres F et G, soit donc directement en aval de la restriction modulable B' qui se ferme. Dans ce mode de réalisation, on notera qu'aucune restriction fixe n'est introduite dans le trajet de retour entre la chambre en délestage $V_1$ et la bâche R et que, donc, les restrictions fixes sont introduites uniquement en aval des restrictions modulables qui se ferment pour limiter un écoulement de fluide sous haute pression, les turbulences créées au travers de ces dernières étant amoindries par la contrepression créée par les restrictions fixes dans les lumières entre chaque restriction modulable qui se ferme et la restriction fixe associée, pour aboutir à un écoulement sensiblement laminaire dans le retour vers la bâche en aval des restrictions fixes. La Figure 5 est une vue partielle, analogue à la Figure 2, montrant l'implantation des lumières de la Figure 4 dans un distributeur à rotor en étoile.

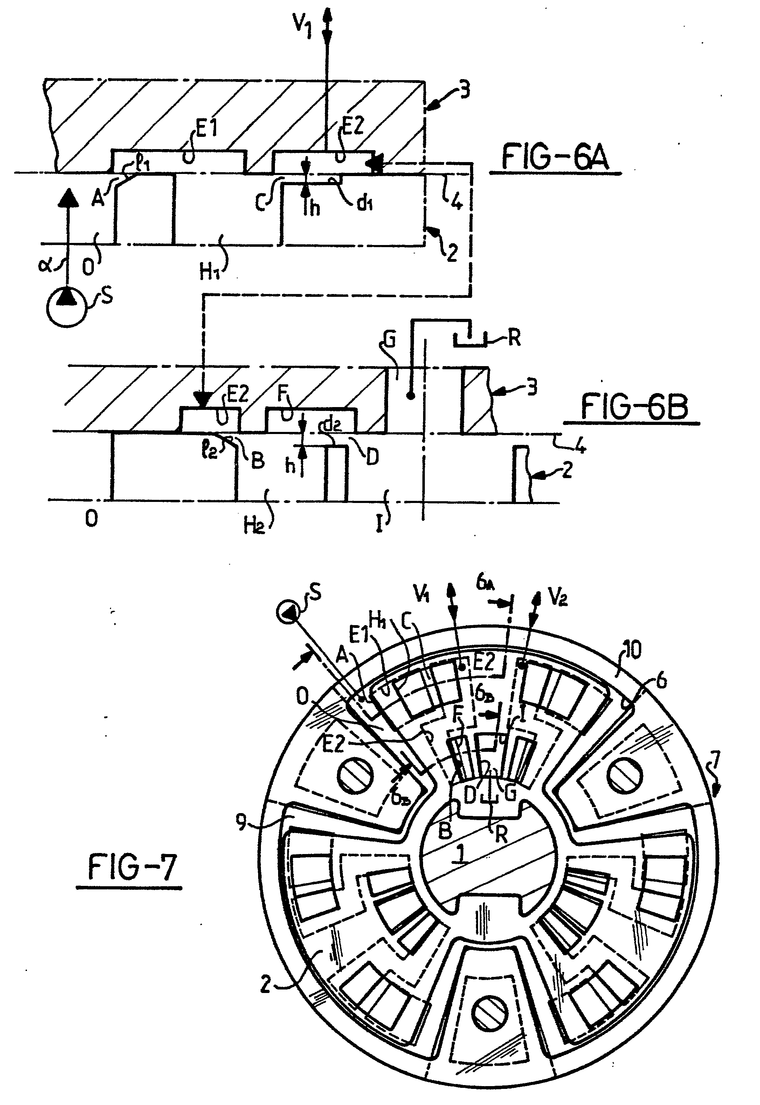

Le mode de réalisation représenté sur les figures 6 et 7 est, dans son principe, en tout point analogue à celui décrit dans les figures 4 et 5 si ce n'est qu'ici les portions de circuit entre la lumière d'admission O et la lumière de décharge G ne sont pas formées en série, circonférentiellement, dans chaque bras du rotor en étoile 2, la première portion de ce circuit étant formée à la périphérie de chaque bras, tandis que la seconde portion de ce circuit est décalée radialement vers l'intérieur, en étant fermée dans l'embase des bras, comme on le voit bien sur la figure 7, le raccordement entre ces deux portions de circuit s'effectuant par une seconde lumière de distribution $E_2$ du second élément de distributeur 3 présentant une forme en Z.

En se référant de nouveau à la figure 8, on notera que, dans le mode de réalisation des figures 1 et 2, les restrictions fixes C et D sont aménagées dans le circuit parallèle $\alpha$ dans les positions représentées par les points $\gamma_2$ et $\delta$ respectivement, (les restrictions fixes C' et D' étant agencées, dans le circuit $\alpha'$, aux points $\gamma'_2$ et $\delta'$). Dans les modes de réalisation des figures 4 à 7, les restrictions C et D du circuit $\alpha$ sont agencées aux points $\gamma_1$ et $\delta$, respectivement, les restrictions fixes C' et D' étant agencées, similairement, dans le circuit $\alpha'$, aux points $\gamma'_1$, et $\delta'$.

**Revendications**

1. Distributeur hydraulique, notamment pour servodirection de véhicule, comprenant: une paire de circuits parallèles ($\alpha$; $\alpha'$) entre une source de fluide sous pression (S) et une bâche (R), chaque circuit parallèle comportant en série, au moins une première (A; A') et une seconde (B; B') restrictions modulables de distribution, les restrictions modulables des deux circuits étant actionnables en synchronisme par un organe d'entrée (1) du distributeur pour commander un moteur hydraulique (V) ayant des chambres opposées ($V_1$, $V_2$) reliées chacune à un circuit parallèle respectif en un point de celui-ci situé entre les première et seconde restrictions modulables de la paire associée, et comportant dans chaque circuit parallèle ($\alpha$; $\alpha'$) un moyen de restriction fixe (C; C'; D; D') mis en œuvre par l'organe d'entrée (1) en synchronisme avec les restrictions modulables de distribution, caractérisé en ce que ledit moyen de restriction fixe est constitué par des première (C; C') et seconde (D; D') restrictions fixes disposées en série avec les restrictions modulables de distribution et situées en aval de la première restriction modulable de distribution (A; A'), lesdites première (C; C') et seconde (D; D') restrictions fixes étant susceptibles d'être mises en œuvre alternativement en fonction du sens d'actionnement des restrictions modulables de distribution par l'organe d'entrée.

2. Distributeur selon la revendication 1, caractérisé en ce que les première (C; C') et seconde (D; D') restrictions fixes sont susceptibles d'être mises

en œuvre en aval de la seconde restriction modulable de distribution (B ; B′) de chaque circuit parallèle ( α, α′).

3.. Distributeur selon la revendication 1, caractérisé en ce que les première (C; C′) et seconde (D; D′) restrictions fixes sont susceptibles d'être mises en oeuvre respectivement en aval des première (A; A′) et seconde (B; B′) restrictions modulables de distribution de chaque circuit parallèle (α, α′), la restriction fixe mise en œuvre étant celle en aval de la restriction modulable de distribution actionnée par l'organe d'entrée (1) dans le sens de sa fermeture.

4. Distributeur selon l'une des revendications 1 à 3, caractérisé en ce que les restrictions modulables de distribution (A, B; A′; B′) et les restrictions fixe (C, D′; C′, D′) sont formées par des bords coopérants de lumières (O, E, H, F, I) formées dans les faces adjacentes de deux éléments de distributeur (2, 3) déplaçables l'un par rapport à l'autre de part et d'autre d'une position centrale.

5. Distributeur selon la revendication 4, caractérisé en ce que les restrictions fixes (C, D ; C′, D′) sont formées chacune par une surface en retrait (d) dans la face d'au moins un des deux éléments de distribution (2, 3).

6. Distributeur selon la revendication 5, caractérisé en ce que la surface en retrait (d) d'au moins une des restrictions fixes de chaque circuit parallèle ( α, α′) s'étend entre deux lumières adjacentes (H, I) de l'élément de distribution correspondant (2).

7. Distributeur selon la revendication 5 ou la revendication 6, caractérisé en ce que la surface en retrait (d₁) de la première restriction fixe (C, C′) de chaque circuit parallèle ( α, α′) est formée au voisinage d'un chanfrein (l₂) formant la seconde restriction modulable (B, B′) dudit circuit parallèle.

8. Distributeur selon l'une des revendications 5 à 7, caractérisé en ce que les deux éléments de distributeur (2, 3) sont rotatifs.

9. Distributeur selon la revendication 8, caractérisé en ce que les faces adjacentes des éléments de distributeur (2, 3) sont planes.

10. Distributeur selon la revendication 9, caractérisé en ce que les éléments de distributeur sont constitués d'un rotor en étoile (2) reçu dans une cavité discoïde (6) d'un stator (7), les surfaces en retrait (d) étant formées dans le rotor (2).

**Patentansprüche**

1. Hydraulischer Verteiler, insbesondere für Fahrzeug-Servolenkung, umfassend: ein Paar Parallelkreise (α; α′) zwischen einer Druckflüssigkeitsquelle (S) und einem Sammelspeicher (R), wobei jeder Parallelkreis hintereinander mindestens eine erste (A; A′) und eine zweite (B; B′) modulierbare Verteilungsdrosselung umfaßt und die modulierbaren Drosselungen der beiden Kreise durch ein Eintrittsorgan (1) des Verteilers snychron betätigbar sind, um einen Hydraulikmotor (V) zu steuern, der gegenüberliegende Kammern (V₁, V₂) hat, von denen jede mit einem jeweiligen Parallelkreis in einem zwischen der ersten und zweiten modulierbaren Verteilungsdrosselung des zugeordneten Paares liegenden Punkt dieses Parallelkreises verbunden ist, und der in jedem Parallelkreis (α; α′) ein festes Drosselungsmittel (C; C′; D; D′) umfaßt, das durch das Eintrittsorgan (1) synchron mit den modulierbaren Verteilungsdrosselungen verwirklicht wird, dadurch gekennzeichnet, daß dieses feste Drosselungsmittel von einer ersten (C; C′) und zweiten (D; D′) festen Drosselung gebildet wird, die hintereinander mit den modulierbaren Verteilungsdrosselungen angeordnet und abwärts von der ersten modulierbaren Verteilungsdrosselung (A; A′) angeordnet sind, wobei diese erste (C; C′) und zweite (D; D′) feste Drosselung dazu geeignet ist, abwechselnd in Abhängigkeit von der Betätigungsvorrichtung der modulierbaren Verteilungsdrosselungen durch das Eintrittsorgan wirksam gemacht zu werden.

2. Verteiler nach Anspruch 1, dadurch gekennzeichnet, daß die erste (C; C′) und zweite (D; D′) feste Drosselung dazu geeignet ist, abwärts von der zweiten modulierbaren Verteilungsdrosselung (B; B′) jedes Parallelkreises (α; α′) eingesetzt zu werden.

3. Verteiler nach Anspruch 1, dadurch gekennzeichnet, daß die erste (C; C′) und zweite (D; D′) feste Drosselung dazu geeignet ist, jeweils abwärts von der ersten (A; A′) und zweiten (B; B′) modulierbaren Verteilungsdrosselung jedes Parallelkreises (α; α′) eingesetzt zu werden, wobei die eingesetzte feste Drosselung diejenige ist, die abwärts von der vom Eintrittsorgan (1) in seiner Schließrichtung betätigten modulierbaren Verteilungsdrosselung liegt.

4. Verteiler nach einem der Ansprüche 1 bis 3, dadurch gekennzeichnet, daß die modulierbaren Verteilungsdrosselungen (A, B; A′, B′) und die festen Drosselungen (C, D′; C′, D′) von den Rändern gebildet werden, die mit Schlitzen (O, E, H, F, I) zusammenwirken, die in den angrenzenden Flächen von zwei Verteilerelementen (2, 3) gebildet werden, die im Verhältnis zueinander beiderseits von einer Mittelstellung aus verstellbar sind.

5. Verteiler nach Anspruch 4, dadurch gekennzeichnet, daß jede der festen Drosselungen (C, D; C′, D′) aus einer in der Fläche mindestens eines der beiden Verteilerelemente (2, 3) zurückspringenden Oberfläche (d) gebildet wird.

6. Verteiler nach Anspruch 5, dadurch gekennzeichnet, daß sich die zurückspringende Oberfläche (d) mindestens einer der festen Drosselungen jedes Parallelkreises (α; α′) zwischen zwei angrenzenden Schlitzen (H, I) des entsprechenden Verteilerelementes (2) erstreckt.

7. Verteiler nach Anspruch 5 oder Anspruch 6, dadurch gekennzeichnet, daß die zurückspringende Oberfläche (d₁) der ersten festen Drosselung (C, C′) jedes Parallelkreises (α; α′) in der Nachbarschaft einer Abschrägung (l₂) ausgebildet ist, welche die zweite modulierbare Drosselung (B, B′) dieses Parallelkreises bildet.

8. Verteiler nach einem der Ansprüche 5 bis 7, dadurch gekennzeichnet, daß die beiden Verteilerelemente (2, 3) rotierend sind.

9. Verteiler nach Anspruch 8, dadurch gekennzeichnet, daß die angrenzenden Flächen der Verteilerelemente (2, 3) eben sind.

10. Verteiler nach Anspruch 9, dadurch gekennzeichnet, daß die Verteilerelemente aus einem Sternrotor (2) bestehen, der in einem diskusförmigen Hohlraum (6) eines Stators (7) aufgenommen wird, wobei die zurückspringenden Oberflächen (d) im Rotor (2) ausgebildet sind.

## Claims

1. Hydraulic distributor, particularly for a power-assisted steering system for a vehicle, comprising: a pair of parallel circuits ($\alpha$, $\alpha'$) between a pressurized fluid source (S) and a tank (R), each parallel circuit comprising, in series, at least one first (A; A') and one second (B; B') modulable distribution restriction, the modulable restrictions of the two circuits being adapted to be operated in synchronism by an inlet component (1) of the distributor for the purpose of controlling a hydraulic motor (V) having opposed chambers ($V_1$, $V_2$) each connected to a respective parallel circuit at a point in the latter which is situated between the first and second modulable restrictions of the associated pair, and further comprising a fixed restriction means (C, C'; D, D') put into operation by the inlet component (1) in each parallel circuit ($\alpha$, $\alpha'$, ) in synchronism with the modulable distribution restrictions, characterized in that said fixed restriction means comprises a first (C; C') and a second (D; D') fixed restriction connected in series with the modulable distribution restrictions, downstream of the first modulable distribution restriction (A; A'); said first (C, C') and second (D, D') fixed restrictions being adapted to be operated alternately by the inlet component according to the operating way of the modulable distribution restrictions.

2. Distributor according to claim 1, characterized in that the first (C; C') and second (D; D') fixed restrictions are adapted to be put into operation downstream of the second modulable distribution restriction (B; B') of each parallel circuit ($\alpha$, $\alpha'$).

3. Distributor according to claim 1, characterized in that the first (C; C') and second (D; D') fixed restrictions are adapted to be put into operation respectively downstream of the first (A; A') and second (B; B') modulable distribution restrictions of each parallel circuit ($\alpha$, $\alpha'$), the fixed restriction put into operation being the one downstream of the modulable distribution restriction operated by the inlet component (1) in the closing direction.

4. Distributor according to one of claims 1 to 3, characterized in that the modulable distribution restrictions (A, B; A'; B') and the fixed restrictions (C, D'; C', D') are formed by the cooperating edges of ports (O, E, H, F, I) formed in the adjacent faces of two distributor components (2, 3) which are displaceable in relation to one another on each side of a central position.

5. Distributor according to claim 4, characterized in that the fixed restrictions (C, D; C', D') are each formed by a recessed surface (d) in the face of at least one of the two distributor components (2, 3).

6. Distributor according to claim 5, characterized in that the recessed surface (d) of at least one of the fixed restrictions of each parallel circuit ($\alpha$, $\alpha'$) extends between two adjacent ports (H, I) of the corresponding distributor component (2).

7. Distributor according to claim 5 or claim 6, characterized in that the recessed surface ($d_1$) of the first fixed restriction (C, C') of each parallel circuit ($\alpha$, $\alpha'$) is formed near a chamber ($\ell2$) forming the second modulable restriction (B, B') of said parallel circuit.

8. Distributor according to one of claims 5 to 7, characterized in that the two distributor components (2, 3) are rotary.

9. Distributor according to claim 8, characterized in that the adjacent faces of the distributor components (2, 3) are planar.

10. Distributor according to claim 9, characterized in that the distributor components are composed of a star-shaped rotor (2) received in a discoid cavity (6) in a stator (7), the recessed surfaces (d) being formed in the rotor (2).

EP 0 290 701 B1

FIG-1

FIG-2

FIG-3

FIG-4

FIG-8

FIG-5

EP 0 290 701 B1

$V_1$

3

E1

E2

$\ell_1$

A

C

h

$d_1$

4

2

$\alpha$

0

S

$H_1$

FIG-6A

G

R

E2

F

3

$\ell_2$

B

h

$d_2$

D

FIG-6B

4

2

0

$H_2$

I

S

$V_1$

$6_A$

$V_2$

E1

$H_1$

C

E2

10

A

$6_B$

6

0

F

E2

$6_B$

7

D

G

9

B

R

2

1

FIG-7